# EUROPEAN PATENT APPLICATION

(11) **EP 4 657 339 A1**
(43) Date of publication of application: **03.12.2025**
(21) Application number: 25179860.9
(22) Date of filing: 30.05.2025
(51) Int. Cl.: G06N 20/20, G06N 3/092

(54) **TRAINING RESOURCE ALLOCATION MODELS**

(30) Priority: 31.05.2024 US 202418731185
(71) Applicant: Intuit Inc., Mountain View, CA 94043 (US)
(72) Inventor: KIM, Alekandr, California, 94043 (US)
(74) Representative: D Young & Co LLP

(57) **Abstract**

A method includes applying a training controller to an untrained predictive model and training data to generate a trained predictive model. The training data includes privileged information. Applying the training controller is an iterative process that repeats until convergence and includes a loss function determination phase, an update phase that updates the untrained predictive model, and a test phase that includes applying the training data to an updated version of the untrained predictive model. The privileged information is applied during the loss function determination phase and excluded during the test phase. The method also includes integrating the trained predictive model into a reward estimation function to generate a trained combined model. The trained predictive model's output includes an input to the reward estimation function. The trained predictive model's output includes a reward determination for the reward estimation function. The trained combined model is presented.

## Description

### BACKGROUND

Computer models are used to evaluate situations and make predictions. Based on the predictions, the computers may allocate resources to achieve the desired results. When the computer models make the prediction, the computers may have limited access to information. For example, the information may not be collected at the time the prediction is made. Waiting for such information to be gathered creates unacceptable delays.

Both expert-built systems (rules-based algorithms built by expert human users) and reinforcement learning (RL) systems (types of machine learning models) may attempt to provide decision-making predictions, but are flawed. An expert-built system approach uses crafted rules to drive the decisions. The expert-built system approach is transparent and may have an easy-to-understand nature. However, the expert-built systems approach may lack flexibility and may be limited by rigidity. The expert-built system approach may struggle to fully utilize and adapt to the available data.

RL systems may have flexibility that expert-built systems lack, as RL systems may be able to adapt and learn. However, RL systems often grapple with inadequate reward models or proxy metrics when dealing with delayed feedback. Delayed feedback occurs when a reward function is not determinable due to a delay in receiving observed results, relative to a time period in which a prediction is desired. For example, if an RL system is used to predict marketing decisions for a housing market, delayed feedback may occur when marketing decisions are to be made before market sales data becomes available. Delayed feedback can lead to inaccurate efficiency estimations in RL systems, as a direct result of the delay in receiving reward data. Thus, a technical issue in RL system is designing and training RL models to generate more accurate predictions when reward feedback is delayed.

### SUMMARY

Particular aspects are set out in the appended independent claims. Various optional embodiments are set out in the dependent claims. One or more embodiments provide for a method. The method includes applying a training controller to an untrained predictive model and training data to generate a trained predictive model. The training data includes privileged information. Applying the training controller includes an iterative process that repeats until convergence. The iterative process includes: 1) a loss function determination phase, 2) an update phase that updates the untrained predictive model according to the loss function determination phase, and 3) a test phase including application of the training data to an updated version of the untrained predictive model. The privileged information is applied during the loss function determination phase. The privileged information is excluded during the test phase. The method also includes integrating, to generate a trained combined model, the trained predictive model into a reward estimation function. An output of the trained predictive model includes an input to the reward estimation function. The output of the trained predictive model includes a reward determination for the reward estimation function. The method also includes presenting the trained combined model.

One or more embodiments provide for a system. The system includes a server including a processor and a data repository in communication with the processor, and storing an untrained predictive model. The data repository also stores training data including privileged information. The data repository also stores a trained predictive model, and a reward estimation function. The data repository also stores a trained combined model. The system also includes a training controller. The processor is programmed to apply the training controller to the untrained predictive model and to the training data to output the trained predictive model using an iterative process that repeats until convergence. The iterative process includes: 1) a loss function determination phase, 2) an update phase that updates an interim predictive model according to the loss function determination phase, and 3) a test phase including application of the training data to an updated version of the interim predictive model. The system also includes a server controller is executable by the processor to perform a computer implemented method including applying the untrained predictive model to the training data. The computer-implemented method also includes integrating the trained predictive model into a reward estimation function to generate a trained combined model. The computer-implemented method also includes presenting the trained combined model.

One or more embodiments provide for another method. The method includes applying a training controller to an untrained predictive model and training data to generate a trained predictive model. The training data includes privileged information and non-privileged information. Applying the training controller includes an iterative process that repeats until convergence. The iterative process includes: 1) a loss function determination phase, 2) an update phase that updates the untrained predictive model according to the loss function determination phase, and 3) a test phase including application of the training data to an updated version of the untrained predictive model. The privileged information and the non-privileged information are applied during the loss function determination phase. The non-privileged information is applied during the test phase. The privileged information is excluded during the test phase. The method also includes integrating, to generate a trained combined model, the trained predictive model into a reward estimation function. An output of the trained predictive model includes a reward determination for the reward estimation function. The output of the trained predictive model includes an input to the reward estimation function. The method also includes applying the trained combined model to unknown data to generate inferences. The method also includes allocating resources, to generate results, based on the inferences. The method also includes labeling, based on the results, the inferences to generate new labeled data. The method also includes applying, to generate a retrained combined model, the training controller to the trained combined model and the new labeled data. The method also includes presenting the retrained combined model.

Other aspects of one or more embodiments will be apparent from the following description and the appended claims.

### BRIEF DESCRIPTION OF DRAWINGS

FIG. 1A shows a computing system, in accordance with one or more embodiments.
FIG. 1B shows details of the training controller of FIG. 1A.
FIG. 2 shows a flowchart of a method for training resource allocation models, in accordance with one or more embodiments.
FIG. 3A, FIG. 3B, and FIG. 4 show an example of providing an explanation of an ensemble model output, in accordance with one or more embodiments.
FIG. 5A and FIG. 5B show an example of a computing system and network environment, in accordance with one or more embodiments.

Like elements in the various figures are denoted by like reference numerals for consistency.

### DETAILED DESCRIPTION

One or more embodiments are directed to training resource allocation models. In particular, one or more embodiments provide for training a prediction model using a wider range of data relative to data available when applying the model in real-world conditions. The prediction model is integrated with a decision-making model to create a combined model. The combined model may then be applied to operation data during a practical application in order to produce a resource allocation prediction, even when reward data is delayed.

The combined model incorporates aspects of two machine learning paradigms. The first paradigm is a machine learning technique known as learning using privileged information (LUPI). The second paradigm is a machine learning technique known as multi-armed bandits (MAB). The combined LUPI-MAB model may be used for strategic and efficient allocation across different possible options when reward information is delayed.

Traditional MAB models work efficiently in scenarios where feedback can be retrieved quickly. Rapid feedback allows for prompt adjustments to distribution. However, in various scenarios, reward feedback may be delayed leading to an inaccurate prediction by the MAB models.

Using the combined model addresses the technical challenge described above by enhancing MAB's reward estimation function using the LUPI machine learning paradigm. Specifically, using privileged information of the LUPI paradigm generates an estimate of delayed metrics by leveraging internal data. The estimate is then used in by the MAB paradigm. In other words, the LUPI paradigm generates an estimated replacement for reward data, which in turn is used by the MAB paradigm to generate a prediction. The combined model thereby provides for a faster and more accurate prediction relative to traditional models operating alone.

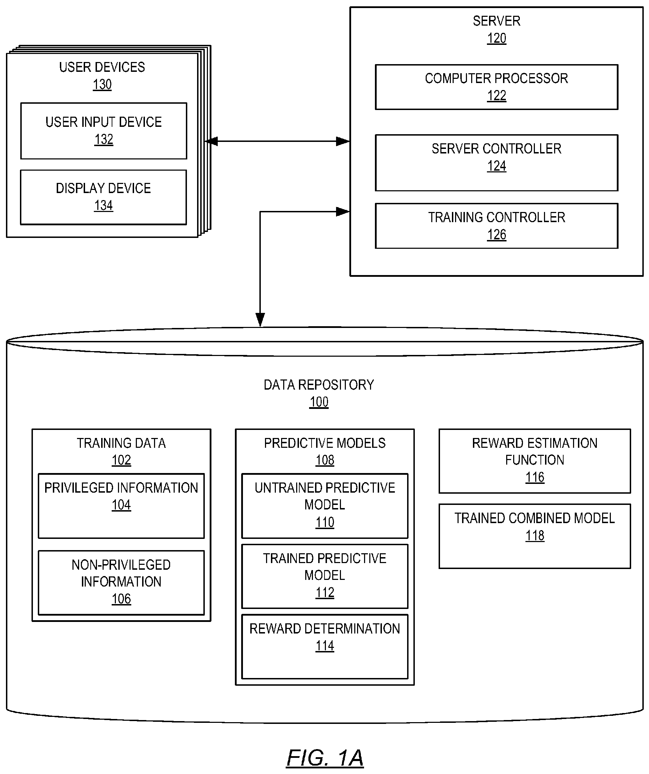

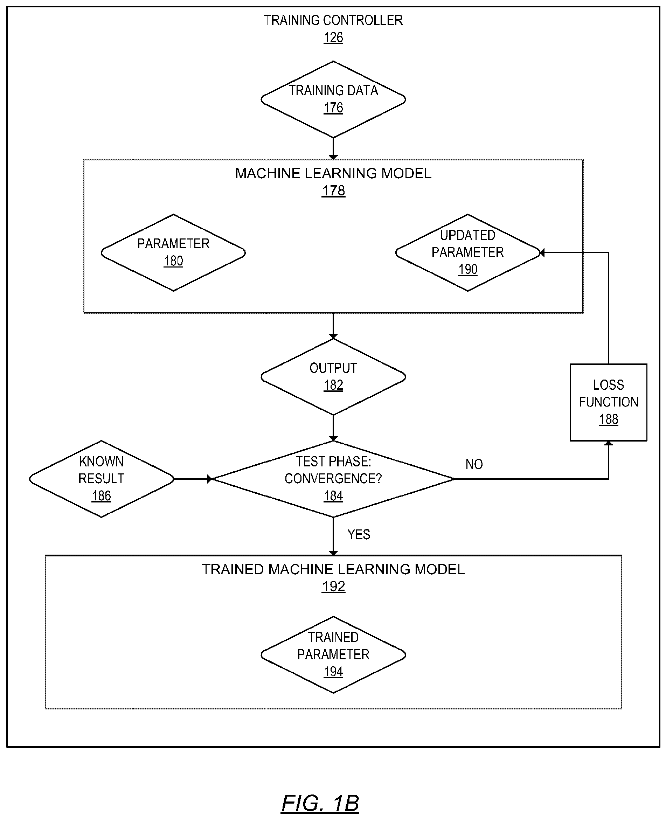

Attention is now turned to the figures. FIG. 1 shows a computing system, in accordance with one or more embodiments. The system shown in FIG. 1A includes a data repository (100). The data repository (100) is a type of storage unit or device (*e.g.*, a file system, database, data structure, or any other storage mechanism) for storing data. The data repository (100) may include multiple different, potentially heterogeneous, storage units and/or devices.

The data repository (100) stores training data (102). Training data (102) is a set of information which is used to train machine learning models as described below. Training data (102) includes details, facts, and other information which is operated on by the models to generate output. For example, training data (102) for a model to determine a return on investment (ROI) may include credit score information, customer age, *etc.* The training data (102), as described further with respect to FIG. 1B, includes information for which results for desired predictions are already known.

The training data (102) may include privileged information (104) and non-privileged information (106). Privileged information (104) is the set of training data (102) that may provide an explanation why an incorrect prediction is wrong, or why a correct prediction was correct. In addition, privileged information (104) may be additional data that a loss function, described below, can use to adjust weights for the training data (102).

The privileged information (104) may be the data that does not yet exist during the inference stage, such as a potential customer's product usage data. The privileged information (104) may also be personal details of a potential customer which are prohibited from distribution, such as due to availability, cost of collection, data storage policy, or legal restrictions. The personal details may be used to determine why a prediction was correct or incorrect. In another example, the privileged information (104) may be one or more labels available for the training dataset. The labels may explain why a prediction was correct or incorrect.

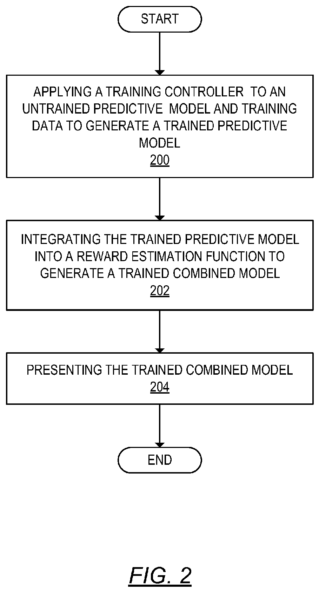

The privileged information (104) is not made available during the test phase of training. However, the privileged information (104) is used during the loss function determination phase, as described further with respect to FIG. 1B and FIG. 2.

Non-privileged information (106) is the set of training data (102) that is not privileged information (*i.e.*, training data for which the reasons why a prediction would be correct or incorrect are not available). Non-privileged information (106) is available during the training stage and the inference stage of machine learning. Non-privileged information (106) reflects the type of information expected to be available to the trained model, such as, operational data. The non-privileged information (106) omits data, such as feedback, that may be delayed in operational situations.

The data repository (100) also stores predictive models (108). A predictive model (108) is a program or algorithm, such as a machine learning model. The predictive models (108) are processes applied to data in order to make predictions. The predictions may include a reward determination (114). The reward determination (114) is an estimate of an expected reward (or result) for one or more possible actions. For example, the reward determination (114) may be an expected ROI from allocating resources to a particular task.

The predictive models (108) include an untrained predictive model (110) which is to be trained using a training process, for example, by a training controller (126). The untrained predictive model (110) may be a model that was trained previously, but which is to be retrained.

The predictive models (108) also include a trained predictive model (112). Applying a training process to the untrained predictive model (110) generates the trained predictive model (112). The process of training the untrained predictive model (110) to the trained predictive model (112) is described with respect to FIG. 1B and FIG. 2.

The data repository (100) also stores a reward estimation function (116). The reward estimation function (116) is a program or algorithm configured to predict a reward for a possible action based on input data. For example, the reward estimation function (116) may be a support vector machine (SVM), a decision tree model, or some other reward-based model.

The data repository (100) also stores a trained combined model (118). The trained combined model (118) is a type of machine learning model that is trained to maximize a cumulative reward for multiple possible actions based on input data. The trained combined model (118) may be applied to input data to estimate an allocation of resources.

The trained combined model (118) integrates both a trained predictive model (112) and a reward estimation function (116). The reward determination (114) produced by the trained predictive model (112) is used as an input to the reward estimation function (116).

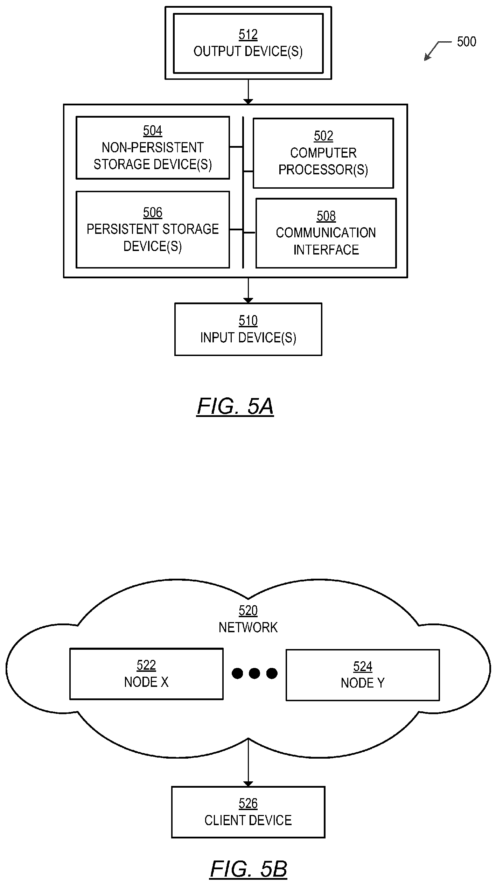

The system shown in FIG. 1A may include other components. For example, the system shown in FIG. 1A also may include a server (120). The server (120) is one or more computer processors, data repositories, communication devices, and supporting hardware and software. The server (120) may be in a distributed computing environment. The server (120) is configured to execute one or more applications, such as the server controller (124) and the training controller (126). An example of a computer system and network that may form the server (120) is described with respect to FIG. 5A and FIG. 5B.

The server (120) includes a computer processor (122). The computer processor (122) is one or more hardware or virtual processors which may execute computer readable program code that defines one or more applications, such as the training controller (126). An example of the computer processor (122) is described with respect to the computer processor(s) (502) of FIG. 5A.

The server controller (124) is software or hardware programmed to coordinate other software or hardware to accomplish one or more methods described herein. For example, the server controller (124) may be software or hardware programmed to execute one or more steps of the method of FIG. 2. The server controller (124) also may control or coordinate the functions of training controller (126), described below.

The server (120) also may include a training controller (126). The training controller (126) is software or hardware which, when executed by the computer processor (122), trains one or more machine learning models (*e.g*., predictive models (108)). The training controller (126) is described in more detail with respect to FIG. 1B.

While FIG. 1A shows a configuration of components, other configurations may be used without departing from the scope of one or more embodiments. For example, various components may be combined to create a single component. As another example, the functionality performed by a single component may be performed by two or more components.

Attention is turned to FIG. 1B, which shows the details of the training controller (126). The training controller (126) is a training algorithm, implemented as software or application specific hardware, that may be used to train one or more of the machine learning models described with respect to the computing system of FIG. 1A.

In general, machine learning models are trained prior to being deployed. The process of training a model, briefly, involves iteratively testing a model against test data for which the final result is known, comparing the test results against the known result, and using the comparison to adjust the model. The process is repeated until the results do not improve more than some pre-determined amount, or until some other termination condition occurs. After training, the final adjusted model is applied to unknown data (*i.e.*, data for which the actual result is not known) in order to make predictions.

Some machine learning models may be applied to vector data structures. A vector is a computer readable data structure. A vector may take the form of a matrix, an array, a graph, or some other data structure. However, a frequently used vector form is a one by N matrix, where each cell of the matrix represents the value for one feature. A feature is a topic of data (*e.g.,* a color of an object, the presence of a word or alphanumeric text, a physical measurement type, *etc.*)*.* A value is a numerical or other recorded specification of the feature. For example, if the feature is the word "cat," and the word "cat" is present in a corpus of text, then the value of the feature may be "1" (to indicate a presence of the feature in the corpus of text).

In one or more embodiments, some of the data in the data repository (100) of FIG. 1A may be stored in the form of one or more vectors. For example, the training data (102) may be expressed as vectors. Similarly, the training data (102) may be converted from natural language into vectors as part of executing a predictive model.

Returning to the operation of the training controller (126), training starts with a set of training data (176), which may be expressed in vector form. The training data (176) may be the training data (102) of FIG. 1A. Thus, the training data (176) also includes the privileged information (104), and the non-privileged information (106) from FIG. 1A. The training data (176) may be expressed in vector form.

The training data (176) may be labeled. The labels represent a known result. Thus, a label applied to a set of the training data (176) may "block" a decision to create a contradicting prediction to the known result.

Thus, the training data (176) may be data for which the final result is known with certainty. For example, when the training data (176) is called during training to predict a result, the machine learning model (178) generates the prediction. However, the label on the training data (176) is the decision that is known to be correct. If the prediction does not match the label, then the weights of the machine learning model (178) may be updated and the training process iterated.

More generally, the training data (176) is provided as input to the machine learning model (178), which may be a predictive model (108) of FIG. 1A. The machine learning model (178) may be characterized as a program that has adjustable parameters. The program is capable of learning and recognizing patterns to make predictions. The output of the machine learning model (178) may be changed by changing one or more parameters of the algorithm, such as the parameter (180) of the machine learning model (178). The parameter (180) may be one or more weights, the application of a sigmoid function, a hyperparameter, or possibly many different variations that may be used to adjust the output of the function of the machine learning model (178).

One or more initial values are set for the parameter (180), for example, based on the untrained predictive model (110) of FIG. 1A. The machine learning model (178) is then executed on the training data (176). The result is an output (182), which is a prediction, a classification, a value, or some other output (182) which the machine learning model (178) has been programmed to output (182).

The output (182) is provided to a test phase (184). The test phase (184) is programmed to achieve convergence during the training process. Convergence is a state of the training process, described below, in which a pre-determined end condition of training has been reached. The pre-determined end condition may vary based on the type of machine learning model (178) being used (supervised versus unsupervised machine learning), or may be pre-determined by a user (*e.g*., convergence occurs after a set number of training iterations, described below).

In the case of supervised machine learning (*e.g*., the trained predictive model (112) of FIG. 1A), the test phase (184) compares the output (182) to a known result (186). The known result (186) is stored in the form of labels for the training data (176). For example, the known result (186) for a particular entry in an output (182) vector of the machine learning model (178) may be a known value, and that known value is a label that is associated with the training data (176).

Continuing the example of supervised machine learning model training, a determination is made whether the output (182) matches the known result (186) to a pre-determined degree. The pre-determined degree may be an exact match, a match to within a pre-specified percentage, or some other metric for evaluating how closely the output (182) matches the known result (186). Convergence may occur when the known result (186) matches the output (182) to within a pre-specified percentage. When many predictions are involved, convergence may occur when more than a threshold number of predictions correctly match the corresponding labels. For example, the threshold may be 95% (representing that in 95 times out of 100 the output (182) of the machine learning model (178) matched the known result (186)) then convergence occurs.

In the case of unsupervised machine learning, the test phase (184) may be compared to the output (182) or to a prior output in order to determine a degree to which the current output changed relative to the immediately prior output or to the original output. Once the degree of change fails to satisfy the threshold degree of change, then the machine learning model may be considered to have achieved convergence. Alternatively, an unsupervised model may determine pseudo labels to be applied to the training data (176) and then achieve convergence as described above for a supervised machine learning model. Other machine learning training processes exist, but the result of the training process may be convergence.

If convergence has not occurred (a "no" at the test phase (184)), then a loss function (188) is generated. The loss function (188) is a program which adjusts the parameter (180) (one or more weights, settings, *etc.*) in order to generate an updated parameter (190). The basis for performing the adjustment is defined by the program that makes up the loss function (188). The program may be an algorithm which attempts to guess how the parameter (180) may be changed so that the next execution of the machine learning model (178), using the training data (176) with the updated parameter (190), will have an output (182) that is more likely to result in convergence. In this manner, the next execution of the machine learning model (178) is more likely to match the known result (186) (supervised learning), or which is more likely to result in an output (182) that more closely approximates the prior output (one unsupervised learning technique), or which otherwise is more likely to result in convergence.

In any case, the loss function (188) is used to specify the updated parameter (190). As indicated, the machine learning model (178) is executed again on the training data (176), this time with the updated parameter (190). The process of execution of the machine learning model (178), execution of the test phase (184), and the execution of the loss function (188) continues to iterate until convergence.

Upon convergence (a "yes" result at the test phase (184)), the machine learning model (178) is deemed to be a trained machine learning model (192). The trained machine learning model (192) has a final parameter, represented by the trained parameter (194). Again, the trained parameter (194) shown in FIG. 1B may be multiple parameters, weights, settings, *etc.*

While training the machine learning model (192), the training controller (126) may use both privileged information (104) and non-privileged information (106) to generate the trained parameter (194). In contrast, the trained parameter (194) may operate on non-privileged data (such as in the non-privileged information (106)) and exclude privileged data (such as in the privileged information (104)).

During deployment, the trained machine learning model (192) with the trained parameter (194) is executed again, but this time on unknown, non-privileged data (which may be in the form of an unknown data vector) for which the final result is not known. The output (182) of the trained machine learning model (192) is then treated as a prediction of the information of interest relative to the unknown, non-privileged data.

FIG. 2 shows a flowchart of a method for training resource allocation models, in accordance with one or more embodiments. The method of FIG. 2 may be implemented using the system of FIG. 1 and one or more of the steps may be performed on or received at one or more computer processors, such as described with respect to FIG. 5A and FIG. 5B.

Step 200 includes applying a training controller to an untrained predictive model and training data to generate a trained predictive model. The training controller generates the trained predictive model using an iterative process that repeats until convergence, as described above with respect to FIG. 1B.

The iterative process, as described above, includes a loss function determination phase, an update phase, and a test phase. The update phase updates the predictive model according to the loss function. During the test phase, the training controller applies the training data to an updated version of the interim predictive model checking for convergence.

The training data used by the training controller during the loss function determination phase includes privileged information. The inclusion of privileged information provides the training controller with additional information to determine parameters for the predictive model.

The training data used by the training controller during the test phase does not include privileged information. By excluding the privileged information, the training controller can gauge the accuracy of the predictive model during the test phase. To gauge the accuracy during the test phase, the training controller applies data sets akin to the data expected to be used in actual use. As a result, the predictions that are generated during the test phase more accurately reflect the behavior of the model during an inference phase of machine learning (when the trained model will be applied to unknown data). If a comparison of the predictions generated during the test phase to the known results does not satisfy the convergence requirements, then the subsequently generated loss function is used to update weights of the model, and the next iteration of training will again include the privileged information. The process iterates until convergence.

The predictive model also may include weights for the non-privileged information which are used to make a determination. The weights may be adjusted based on the loss function determination phase. Additionally, the predictive model may include weights for the privileged information. The weights for the privileged information are used during the loss function determination phase.

Step 202 includes integrating the trained predictive model into a reward estimation function to generate a trained combined model. Integrating is performed by directing the output of the trained predictive model as an input to the reward estimation function.

The reward estimation function may provide a list of possible actions (e.g., resource allocations) with expected returns. The list may be sorted based on the expected returns. Alternatively, the reward estimation function may provide an action, among a list of possible actions, having the greatest expected return.

The trained combined model produces a reward estimation. The reward estimation is based on the predictions created by the trained predictive model. As the trained predictive model was trained using privileged information, the trained combined model benefits from the training based on the privileged information even when the trained combined model does not operate on the same type of information. In other words, the trained combined model does not operate using privileged information during an inference phase when the trained combined model is applied to unknown data, as the privileged information for the unknown data is not available, but the trained combined model is nevertheless improved by training using privileged information. Additionally, during the inference phase, the trained predictive model predicts a reward feedback used by reward estimation function.

Step 204 includes presenting the trained combined model. Presenting may include displaying various components of the trained combined model, for example, parameters for the predictive model. However, presenting may also include providing the trained combined model to another program for further processing. Presenting also may include storing the trained combined model in a computer readable medium. Presenting also may include transmitting the trained combined model to another device, such as a user device.

Presenting at step 204 also may include applying the trained combined model to unknown data during an inference phase of machine learning. The trained combined model may be applied to a set of unknown data to generate inferences. The unknown data may be information gathered in non-training conditions. As an example, marketing data for which the predicted result is not known may be unknown data. The inference may be a proposed resource allocation scheme. For example, a trained combined model may be applied to marketing data to generate a marketing budget allocation plan.

Once the trained combined model has created inferences, the inferences may be used to retrain the trained combined model. The generated inferences may be compared against the actual results and the unknown data labeled accordingly. The training controller can then be applied to the labeled unknown data, the trained combined model (or to the trained predictive model used for the trained combined model), and the updated model accordingly.

While the various steps in this flowchart are presented and described sequentially, at least some of the steps may be executed in different orders, may be combined, or omitted, and at least some of the steps may be executed in parallel. Furthermore, the steps may be performed actively or passively.

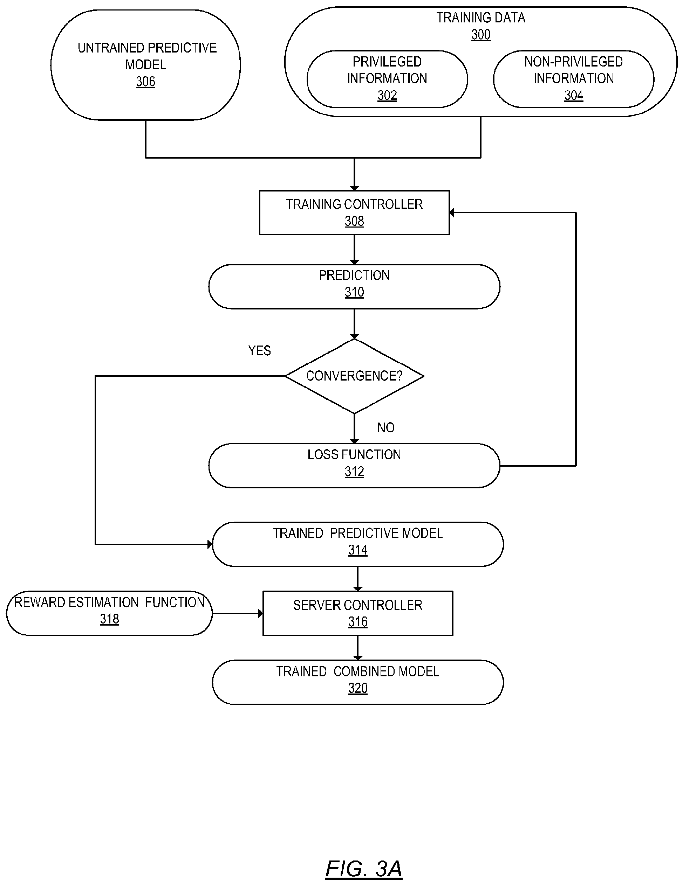

FIG. 3A shows an example of training resource allocation models, in accordance with one or more embodiments. The following example is for explanatory purposes only and not intended to limit the scope of one or more embodiments.

Training data (300) includes both privileged information (302) and non-privileged information (304). The privileged information (302) explains why an incorrect prediction is correct or incorrect. The privileged information (302) is only made available during the training stage, for example, internal business data, as well as information that may not be available during real-world situations, for example, due to delays in collection, policy decisions, *etc.*

The training data (300) may represent a large number of use cases with known results. Each set of use cases may be labeled to indicate the corresponding result. Both privileged information (302) and non-privileged information (304) may be associated with an individual use case.

An untrained predictive model (306) may be provided which makes predictions based on unknown data during the inference phase of machine learning. The non-privileged information (304) includes data similar to the unknown data expected to be encountered. The untrained predictive model (306) can be a previously trained predictive model which is being retrained, for example, based on new training data.

The training controller (308) is applied to the non-privileged information (304) in the training data (300) and the untrained predictive model (306) to generate a prediction (310). The prediction (310) may be a set of predictions for various use cases in the training data (300).

The prediction (310) is checked against the training data (300), for example, to compare the prediction (310) against labels indicating the correct results. If the prediction (310) is not deemed to converge with the training data (300), a loss function is used against the training data (300) (including the privileged information (302)) to generate updated parameters for the untrained predictive model (306).

In the next iteration, the training controller (308) is applied to the non-privileged information (304) and the updated untrained predictive model (306) to generate a new prediction (310). The new prediction (310) is checked to determine if convergence has been achieved.

As described above with respect to FIG. 1B, convergence may occur when successive iterations do not change the prediction by more than a predetermined amount. Convergence may also occur after a set number of training iterations.

The prediction (310) and loss function (312) cycle may be repeated until the prediction (310) is deemed to converge with the training data (300). At convergence, for example, after a set number of iterations, the training controller (308) creates the trained predictive model (314) based on the current updates to the untrained predictive model (306).

A server controller (316) integrates the trained predictive model (314) and a reward estimation function (318) to generate a trained combined model (320). The output of the trained predictive model (314) is used as an input to the reward estimation function (318).

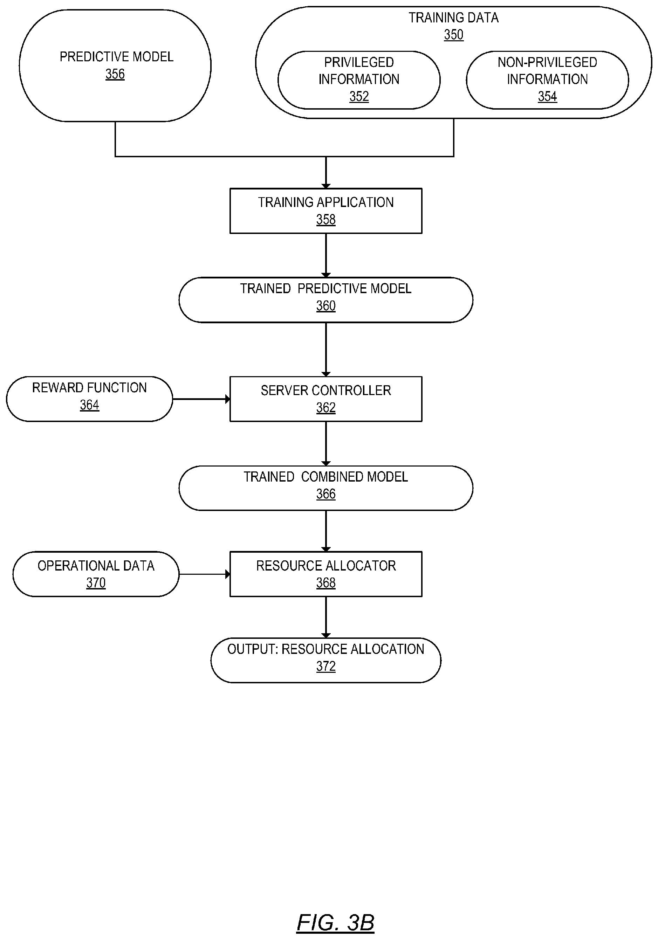

FIG. 3B shows an example of training resource allocation models, in accordance with one or more embodiments. FIG. 3B includes application of a trained combined model, such as generated by FIG. 3A, and operation data to produce a resource allocation. The following example is for explanatory purposes only and not intended to limit the scope of one or more embodiments.

Training data (350) includes both privileged information (352) and non-privileged information (354). The training data (350) may represent a large number of use cases with known results.

A predictive model (356) is provided which makes predictions based on data. The non-privileged information (354) includes data similar to the data expected to be encountered in a real-world situation.

The training application (358) is applied to the training data (350) to create a trained predictive model (360). A server controller (362) integrates the trained predictive model (360) and a reward function (364) to generate a trained combined model (366).

A resource allocator (368) is applied to the trained combined model (366) and operational data (370). The operational data (370) includes information that is expected to be available during operation of the trained combined model (366). For example, the operational data (370) may include information provided on a loan application. The resource allocator (368) generates a resource allocation (372) which is presented by the resource allocator (368) as output. The resource allocation (372) may include an amount of money approved as credit to a loan applicant.

In one example, a resource allocator assigns a credit score to a user. Decision trees are widely used in credit scoring to determine a credit score for a user. The decision trees are built based on various features. Decisions are made at different branching points based on split criteria for the features.

Using privileged information can improve decision trees by utilizing the privileged information during the training phase. The split criteria can be determined based on privileged information during the training phase, but regular features (non-privileged information) are used during the testing phase.

For example: a regular feature for credit scoring can be a person's age, but the splitting criteria for age may be in the range of 25-30. By including privileged information (like family status or education), a training controller may find 27 is a better split (*e.g*., because after age 27, people are more likely to have a family, more education, *etc.*)*.*

One current challenge in the world of digital marketing strategy involves the understanding, segmentation, and allocation of resources among the various target audience groups. A significant dilemma comes up especially in the context of new customer acquisition where marketers often struggle to maximize the effectiveness of allocation of their marketing budget.

Currently, marketers use third-party resources and generic pre-defined segmentation strategies to define their target audience for their marketing campaigns. The above approaches, although traditionally effective, suffer from a number of limitations. The approaches are often not sufficiently tailored to the specific characteristics of a company's customer base. Hence, the above approaches can lead to decisions that underutilize the company's marketing budget, potentially allocating resources to underperforming audience segments.

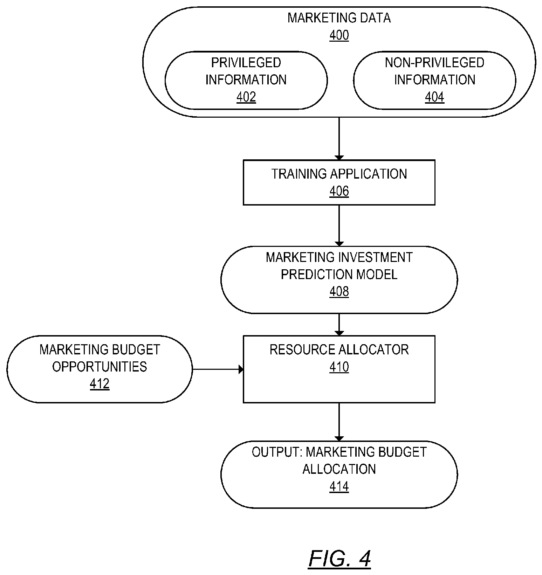

FIG. 4 shows an example of training resource allocation models, in accordance with one or more embodiments. The following example is for explanatory purposes only and not intended to limit the scope of one or more embodiments.

Marketing data (400) includes both privileged information (402) and non-privileged information (404). The privileged information (402) includes data which is only available during the testing phase, for example, internal client data such as subscription renewals, for which the reasons are known why a weight should be changed during training. The marketing data (400) may include past history of marketing campaigns.

The training application (406) is applied to the marketing data (400) to create a marketing investment prediction model (408). The marketing investment prediction model (408) is a trained combined model capable of allocating marketing budget resources. As the training application (406) trains the marketing investment prediction model (408) with privileged information (402), the marketing investment prediction model (408) can allocate resources efficiently even when reward information is delayed. The privileged information (402) may be data regarding client renewals of their subscription.

A resource allocator (410) is applied to the marketing investment prediction model (408) and marketing budget opportunities (412) to generate a marketing budget allocation (414). The marketing budget opportunities (412) includes potential marketing campaigns. The marketing budget allocation (414) indicates an allocation of the marketing budget to the potential marketing opportunities. For example, the marketing budget allocation (414) may provide expense budgets for the potential marketing campaigns the trained combined model predicts will provide the highest return on investment.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5A, the computing system (500) may include one or more computer processor(s) (502), non-persistent storage device(s) (504), persistent storage device(s) (506), a communication interface (508) (*e.g*., Bluetooth interface, infrared interface, network interface, optical interface, *etc.*), and numerous other elements and functionalities that implement the features and elements of the disclosure. The computer processor(s) (502) may be an integrated circuit for processing instructions. The computer processor(s) (502) may be one or more cores, or micro-cores, of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.*, which may be processed and transmitted by the computing system (500) in accordance with one or more embodiments. The communication interface (508) may include an integrated circuit for connecting the computing system (500) to a network (not shown) (*e.g*., a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device. One or more of the output device(s) (512) may be the same or different from the input device(s) (510). The input device(s) (510) and output device(s) (512) may be locally or remotely connected to the computer processor(s) (502). Many different types of computing systems exist, and the aforementioned input device(s) (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (502), is configured to perform one or more embodiments, which may include transmitting, receiving, presenting, and displaying data and messages described in the other figures of the disclosure. Additionally, or alternatively, software instructions in the form of computer readable program code to perform embodiments may be stored, in whole or in part, temporarily or permanently, on transient media such as carrier waves and transmission media.

The computing system (500) in FIG. 5A may be connected to, or be a part of, a network. For example, as shown in FIG. 5B, the network (520) may include multiple nodes (*e.g.,* node X (522) and node Y (524), as well as extant intervening nodes between node X (522) and node Y (524)). Each node may correspond to a computing system, such as the computing system (500) shown in FIG. 5A, or a group of nodes combined may correspond to the computing system (500) shown in FIG. 5A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (500) may be located at a remote location and connected to the other elements over a network.

The nodes (*e.g.,* node X (522) and node Y (524)) in the network (520) may be configured to provide services for a client device (526). The services may include receiving requests and transmitting responses to the client device (526). For example, the nodes may be part of a cloud computing system. The client device (526) may be a computing system, such as the computing system (500) shown in FIG. 5A. Further, the client device (526) may include or perform all or a portion of one or more embodiments.

The computing system (500) of FIG. 5A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g*., data presented as actual data values through text, or rendered by the computing device into a visual representation of the data, such as through visualizing a data model.

Thus, from one perspective, there has now been described a method which includes applying a training controller to an untrained predictive model and training data to generate a trained predictive model. The training data includes privileged information. Applying the training controller is an iterative process that repeats until convergence and includes a loss function determination phase, an update phase that updates the untrained predictive model, and a test phase that includes applying the training data to an updated version of the untrained predictive model. The privileged information is applied during the loss function determination phase and excluded during the test phase. The method also includes integrating the trained predictive model into a reward estimation function to generate a trained combined model. The trained predictive model's output includes an input to the reward estimation function. The trained predictive model's output includes a reward determination for the reward estimation function. The trained combined model is presented.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc.*) may be used as an adjective for an element (*i.e*., any noun in the application). The use of ordinal numbers is not to imply or create any particular ordering of the elements, nor to limit any element to being only a single element unless expressly disclosed, such as by the use of the terms "before", "after", "single", and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

Further examples of feature combinations taught by the present disclosure are set out in the following numbered clauses:
1. A method comprising:
   applying a training controller to an untrained predictive model and training data to generate a trained predictive model, wherein:
      the training data comprises privileged information,
      applying the training controller comprises an iterative process that repeats until convergence, the iterative process comprising a loss function determination phase, an update phase that updates the untrained predictive model according to the loss function determination phase, and a test phase including application of the training data to an updated version of the untrained predictive model,
      the privileged information is applied during the loss function determination phase, and
      the privileged information is excluded during the test phase;
   integrating, to generate a trained combined model, the trained predictive model into a reward estimation function, wherein:
      an output of the trained predictive model comprises an input to the reward estimation function, and
      the output of the trained predictive model comprises a reward determination for the reward estimation function; and
   presenting the trained combined model.
2. The method of clause 1, wherein the training data further comprises non-privileged information.
3. The method of clause 2, wherein the untrained predictive model comprises first weights for the non-privileged information.
4. The method of clause 3, wherein the update phase comprises updating the first weights.
5. The method of clause 4, wherein the untrained predictive model further comprises second weights for the privileged information, and wherein the update phase further comprises updating the second weights.
6. The method of any preceding clause, further comprising:
   applying the trained combined model to unknown data to generate a plurality of inferences.
7. The method of clause 6, further comprising:
   labeling the plurality of inferences to generate new labeled data; and
   applying, to generate a retrained combined model, the training controller to the trained combined model and the new labeled data.
8. The method of any preceding clause, wherein the training data comprises labels representing known results.
9. The method of clause 8, wherein convergence occurs when application of the untrained predictive model to the training data during the test phase produces predictions in agreement with the labels.
10. The method of any preceding clause, further comprising applying operational data to the trained combined model to generate a resource allocation.
11. The method of clause 10, wherein the resource allocation comprises a distribution of resources to a plurality of possible choices.
12. The method of any preceding clause, wherein the trained combined model is a multi-armed bandit (MAB) model.
13. The method of any preceding clause, wherein the reward determination is an estimated return on investment.
14. A system comprising:
   a server comprising a processor;
   a data repository in communication with the processor, and storing:
      an untrained predictive model,
      training data comprising privileged information,
      a trained predictive model,
      a reward estimation function, and
      a trained combined model;
   a training controller, wherein the processor is programmed to apply the training controller to the untrained predictive model and to the training data to output the trained predictive model using an iterative process that repeats until convergence, the iterative process comprising a loss function determination phase, an update phase that updates an interim predictive model according to the loss function determination phase, and a test phase including application of the training data to an updated version of the interim predictive model; and
   a server controller executable by the processor to perform a computer-implemented method comprising:
      applying the untrained predictive model to the training data; and
      integrating the trained predictive model into a reward estimation function to generate a trained combined model; and
      presenting the trained combined model.
15. The system of clause 14, further comprising applying the trained combined model to operational data to generate a resource allocation.
16. The system of clause 14 or clause 15, wherein the trained combined model is a multi-armed bandit (MAB) model.
17. The system of any of clauses 14 to 16, wherein:
   the training data further comprises non-privileged information,
   the untrained predictive model comprises first weights for the non-privileged information, and
   the update phase comprises updating the first weights.
18. The system of clause 17, wherein the untrained predictive model further comprises second weights for the privileged information, and wherein the update phase comprises updating the second weights.
19. The system of any of clauses 14 to 18, wherein the computer-implemented method further comprises:
   applying the trained combined model to unknown data to generate a plurality of inferences;
   labeling the plurality of inferences to generate new labeled data; and
   applying, to generate a retrained combined model, the training controller to the trained combined model and the new labeled data.
20. A method comprising:
   applying a training controller to an untrained predictive model and training data to generate a trained predictive model, wherein:
      the training data comprises privileged information and non-privileged information,
      applying the training controller comprises an iterative process that repeats until convergence, the iterative process comprising a loss function determination phase, an update phase that updates the untrained predictive model according to the loss function determination phase, and a test phase including application of the training data to an updated version of the untrained predictive model,
      the privileged information and the non-privileged information are applied during the loss function determination phase, and
      the non-privileged information is applied during the test phase, and
      the privileged information is excluded during the test phase;
   integrating, to generate a trained combined model, the trained predictive model into a reward estimation function, wherein:
      an output of the trained predictive model comprises a reward determination for the reward estimation function, and
      the output of the trained predictive model comprises an input to the reward estimation function;
   applying the trained combined model to unknown data to generate a plurality of inferences;
   allocating resources, to generate results, based on the inferences;
   labeling, based on the results, the plurality of inferences to generate new labeled data;
   applying, to generate a retrained combined model, the training controller to the trained combined model and the new labeled data; and
   presenting the retrained combined model.

## Claims

1. A method comprising:
applying a training controller to an untrained predictive model and training data to generate a trained predictive model, wherein:
the training data comprises privileged information,
applying the training controller comprises an iterative process that repeats until convergence, the iterative process comprising a loss function determination phase, an update phase that updates the untrained predictive model according to the loss function determination phase, and a test phase including application of the training data to an updated version of the untrained predictive model,
the privileged information is applied during the loss function determination phase, and
the privileged information is excluded during the test phase;
integrating, to generate a trained combined model, the trained predictive model into a reward estimation function, wherein:
an output of the trained predictive model comprises an input to the reward estimation function, and
the output of the trained predictive model comprises a reward determination for the reward estimation function; and
presenting the trained combined model.

2. The method of claim 1, wherein the training data further comprises non-privileged information.

3. The method of claim 2, wherein the untrained predictive model comprises first weights for the non-privileged information.

4. The method of claim 3, wherein the update phase comprises updating the first weights.

5. The method of claim 4, wherein the untrained predictive model further comprises second weights for the privileged information, and wherein the update phase further comprises updating the second weights.

6. The method of any preceding claim, further comprising:
applying the trained combined model to unknown data to generate a plurality of inferences.

7. The method of claim 6, further comprising:
labeling the plurality of inferences to generate new labeled data; and
applying, to generate a retrained combined model, the training controller to the trained combined model and the new labeled data.

8. The method of any preceding claim, wherein the training data comprises labels representing known results, for example, wherein convergence occurs when application of the untrained predictive model to the training data during the test phase produces predictions in agreement with the labels.

9. The method of any preceding claim, further comprising applying operational data to the trained combined model to generate a resource allocation, for example, wherein the resource allocation comprises a distribution of resources to a plurality of possible choices.

10. The method of any preceding claim, wherein the trained combined model is a multi-armed bandit (MAB) model.

11. The method of any preceding claim, wherein the reward determination is an estimated return on investment.

12. A system comprising:
a server comprising a processor;
a data repository in communication with the processor, and storing:
an untrained predictive model,
training data comprising privileged information,
a trained predictive model,
a reward estimation function, and
a trained combined model;
a training controller, wherein the processor is programmed to apply the training controller to the untrained predictive model and to the training data to output the trained predictive model using an iterative process that repeats until convergence, the iterative process comprising a loss function determination phase, an update phase that updates an interim predictive model according to the loss function determination phase, and a test phase including application of the training data to an updated version of the interim predictive model; and
a server controller executable by the processor to perform a computer-implemented method comprising:
applying the untrained predictive model to the training data; and
integrating the trained predictive model into a reward estimation function to generate a trained combined model; and
presenting the trained combined model.

13. The system of claim 12, further comprising applying the trained combined model to operational data to generate a resource allocation.

14. The system of claim 12 or claim 13, wherein the trained combined model is a multi-armed bandit (MAB) model.

15. A method comprising:
applying a training controller to an untrained predictive model and training data to generate a trained predictive model, wherein:
the training data comprises privileged information and non-privileged information,
applying the training controller comprises an iterative process that repeats until convergence, the iterative process comprising a loss function determination phase, an update phase that updates the untrained predictive model according to the loss function determination phase, and a test phase including application of the training data to an updated version of the untrained predictive model,
the privileged information and the non-privileged information are applied during the loss function determination phase, and
the non-privileged information is applied during the test phase, and
the privileged information is excluded during the test phase;
integrating, to generate a trained combined model, the trained predictive model into a reward estimation function, wherein:
an output of the trained predictive model comprises a reward determination for the reward estimation function, and
the output of the trained predictive model comprises an input to the reward estimation function;
applying the trained combined model to unknown data to generate a plurality of inferences;
allocating resources, to generate results, based on the inferences;
labeling, based on the results, the plurality of inferences to generate new labeled data;
applying, to generate a retrained combined model, the training controller to the trained combined model and the new labeled data; and
presenting the retrained combined model.
